# EUROPEAN PATENT SPECIFICATION

(11) **EP 4 357 845 B1**
(45) Date of publication and mention of the grant of the patent: **09.09.2026**
(21) Application number: 21949722.9
(22) Date of filing: 16.07.2021
(51) Int. Cl.: G02F 1/035, G02F 1/03

(54) **ELECTRO-OPTIC MODULATOR, OPTICAL MODULATION SYSTEM, AND INTEGRATED OPTICAL CHIP**
ELEKTROOPTISCHER MODULATOR, OPTISCHES MODULATIONSSYSTEM UND INTEGRIERTER OPTISCHER CHIP
MODULATEUR ÉLECTRO-OPTIQUE, SYSTÈME DE MODULATION OPTIQUE ET PUCE OPTIQUE INTÉGRÉE

(43) Date of publication of application: 24.04.2024
(73) Proprietor: Huawei Technologies Co., Ltd., Shenzhen, Guangdong 518129 (CN)
(72) Inventor: CHEN, Hongmin, Shenzhen, Guangdong 518129 (CN); SUN, Mengdie, Shenzhen, Guangdong 518129 (CN); LI, Guanpeng, Shenzhen, Guangdong 518129 (CN)
(74) Representative: Thun, Clemens
(86) International application number: PCT/CN2021/106805
(87) International publication number: WO 2023/283938

(56) References cited:
- EP-B1- 3 177 961
- WO-A1-2020/202605
- WO-A1-2021/103294
- CN-A- 111 175 999
- CN-A- 112 764 246
- US-A1- 2020 064 706
- US-B1- 6 522 793
- TOROGHI SEYFOLLAH ET AL: "Thin film lithium niobate optical modulators for THz frequency applications", SPIE PROCEEDINGS; [PROCEEDINGS OF SPIE ISSN 0277-786X], SPIE, US, vol. 11279, 2 March 2020 (2020-03-02), pages 112791R - 112791R, XP060130722, ISBN: 978-1-5106-3673-6, DOI: 10.1117/12.2546735

## Description

### TECHNICAL FIELD

This application relates to an electro-optical modulator, and an optical modulation system, and an integrated optical chip that include the electro-optical modulator.

### BACKGROUND

In an optical communication system, an electro-optical modulator is a core component for converting an electrical signal into an optical signal. A thin-film lithium niobate (TFLN) modulator has advantages such as good linearity, no need for cooling, low optical loss, and high bandwidth. Therefore, the thin-film lithium niobate modulator can be used in a scenario such as coherent optical communication with a baud rate higher than 130 G.

The TFLN modulator is electrically connected to an electrical chip. The electrical chip is configured to output an alternating current signal to drive the thin-film lithium niobate modulator to work, and the electrical chip needs to work under driving of a direct current signal. Therefore, the electrical chip needs to include a complex peripheral circuit (including a capacitor, an inductor, and the like) to distinguish between a transmission channel of the direct current signal and a transmission channel of the alternating current signal, to prevent the direct current signal from being transmitted to the TFLN modulator, and prevent the alternating current signal from being transmitted to a node that provides the direct current signal. The peripheral circuit causes a large overall size and high costs of the electrical chip. This is not conducive to miniaturization and cost control of the electrical chip, and is not conducive to packaging of the electrical chip and the TFLN modulator.

US 6 522 793 relates to an electro-optic modulator which comprises an electro-optic substrate, a Mach-Zehnder Interferometer optical waveguide structure, and at least two electrodes. WO 2021/103294 relates to a distributed light intensity modulator. EP 3 177 961 relates to a multi-segment Mach-Zehnder modulator-driver system, and to an optical modulator comprising a waveguide comprising a proximate arm and a distal arm. WO 2020/202605 relates to an optical modulator in which optical waveguides and a control electrode are formed on a substrate that has an electro-optic effect, and the optical waveguides comprise at least one Mach-Zehnder optical waveguide. An article by Seyfollah Toroghi, John Rollinson, Mona Hella, Ingrid Wilke, Payam Rabiei "Thin film lithium niobate optical modulators for THz frequency applications" in Proceedings Volume 11279, Terahertz, RF, Millimeter, and Submillimeter-Wave Technology and Applications XIII; 112791R (2020) relates to Mach-Zehnder modulator.

### SUMMARY

The claimed subject matter is defined in independent claims.

According to a first aspect, this application provides an electro-optical modulator, including an electrode conversion portion, including: a first input electrode and a second input electrode, where the first input electrode is configured to receive a first modulation signal output by an electrical chip, and the second input electrode is configured to receive a second modulation signal output by the electrical chip; and an optical modulation portion, including: a first modulation electrode, a second modulation electrode, a third modulation electrode, a first modulation arm, and a second modulation arm, where the first modulation electrode is between the second modulation electrode and the third modulation electrode, the first modulation arm is between the first modulation electrode and the second modulation electrode, and the second modulation arm is between the first modulation electrode and the third modulation electrode. The first modulation electrode is coupled to the first input electrode, and is configured to receive the first modulation signal. The second modulation electrode and the third modulation electrode are separately coupled to the second input electrode, and are separately configured to receive the second modulation signal. The first modulation electrode, the second modulation electrode, and the third modulation electrode are configured to modulate input light in the first modulation arm and the second modulation arm based on the first modulation signal and the second modulation signal, and modulated input light is output as modulated light from the first modulation arm and the second modulation arm.

Currently, there are mainly two driving manners in which the electrical chip drives the electro-optical modulator to work. The electrical chip has different circuit structures in the two driving manners. In Manner 1, the electrical chip has three output ends electrically connected to the electro-optical modulator. One output end outputs a modulation signal that changes with time, and two other output ends each maintain a ground voltage. In this driving manner, the electrical chip includes a peripheral circuit for separately filtering out a direct current signal and an alternating current signal. In Manner 2, the electrical chip has two output ends electrically connected to the electro-optical modulator. The two output ends respectively output the first modulation signal and the second modulation signal. The first modulation signal and the second modulation signal separately change with time, and at a same moment, the first modulation signal and the second modulation signal have a same amplitude and opposite directions. In this driving manner, the electrical chip does not include a peripheral circuit. The electro-optical modulator includes the electrode conversion portion. The first input electrode and the second input electrode are converted into the first modulation electrode, the second modulation electrode, and the third modulation electrode, so that signals transmitted on the first input electrode and the second input electrode may be separately loaded to the optical modulation portion via the first modulation electrode, the second modulation electrode, and the third modulation electrode, to modulate the input light in the first modulation arm and the second modulation arm. Therefore, the electro-optical modulator may be driven in Manner 2. In other words, the electrical chip that does not include the peripheral circuit for filtering out the direct current signal and the alternating current signal may be used to drive the electro-optical modulator. This helps reduce a size of the electrical chip driving the electro-optical modulator, helps reduce costs of the electrical chip driving the electro-optical modulator, and facilitates packaging of the electro-optical modulator and the electrical chip in an optical modulation system.

In some implementations, the electro-optical modulator further includes a substrate, and the electrode conversion portion and the optical modulation portion are on a same surface of the substrate.

In this way, the electrode conversion portion may be electrically connected to the optical modulation portion.

In some implementations, the electrode conversion portion further includes a bridging portion. The bridging portion is embedded in the substrate, and a part of the bridging portion is exposed relative to the surface that is of the substrate and on which the electrode conversion portion is located. The part of the bridging portion exposed relative to the substrate is separately coupled to the first modulation electrode and the first input electrode.

In this way, an electrical connection is established between the first input electrode and the first modulation electrode, and the electrical connection is implemented via the bridging portion embedded in the substrate, so that the first input electrode and the second input electrode may be flush with an end face of the electro-optical modulator, and a packaging process of the electro-optical modulator is facilitated.

In some implementations, two ends of the second input electrode are respectively coupled to the second modulation electrode and the third modulation electrode, and the second modulation electrode, the second input electrode, and the third modulation electrode are enclosed to form an accommodation area having an opening. The first input electrode is in the accommodation area, and the first modulation electrode extends from outside of the accommodation area through the opening to the accommodation area and is coupled to the first input electrode.

In this way, an electrical connection is established between the first input electrode and the first modulation electrode.

In some implementations, the electrode conversion portion is an axisymmetric structure as a whole.

In some implementations, the first modulation electrode, the second modulation electrode, and the third modulation electrode are made of metal. The optical modulation portion further includes a transparent conduction layer on the substrate. The first modulation electrode, the second modulation electrode, and the third modulation electrode are on a surface that is of the transparent conduction layer and that is away from the substrate, and are in electrical contact with the transparent conduction layer.

Because the first modulation electrode, the second modulation electrode, and the third modulation electrode that are made of metal materials easily absorb the input light in the first modulation arm and the second modulation arm, to reduce an absorption amount of the input light by the first modulation electrode, the second modulation electrode, and the third modulation electrode, a preset distance should be kept between the first modulation electrode, the second modulation electrode, and the third modulation electrode and the first modulation arm and the second modulation arm that are adjacently arranged. Compared with a metal material, a transparent conducting material has a small absorption function on light. If the first modulation electrode, the second modulation electrode, and the third modulation electrode are set to be made of transparent conducting materials, absorption functions of the first modulation electrode, the second modulation electrode, and the third modulation electrode on the light can be reduced, and the preset distance between the first modulation electrode, the second modulation electrode, and the third modulation electrode, and the first modulation arm and the second modulation arm can be reduced. However, compared with the metal material, the transparent conducting material has a weak conductivity. This is not conducive to conduction of electrical signals (including the first modulation signal and the second modulation signal). Therefore, in some embodiments, the first modulation electrode, the second modulation electrode, and the third modulation electrode are set to be made of the metal materials, and the transparent conduction layer in direct electrical contact with the first modulation electrode, the second modulation electrode, and the third modulation electrode is added, to enable the transparent conduction layer and the first modulation electrode, the second modulation electrode, and the third modulation electrode to jointly transmit the electrical signals. In an aspect, a good conductivity may be implemented via the first modulation electrode, the second modulation electrode, and the third modulation electrode that are made of the metal materials. In another aspect, because the transparent conduction layer has a small absorption function on the light, a distance between the transparent conduction layer and the first modulation arm and a distance between the transparent conduction layer and the second modulation arm can be reduced. When the distance between the transparent conduction layer and the first modulation arm and the distance between the transparent conduction layer and the second modulation arm are reduced, impact of a first electric field and a second electric field that is generated by the first modulation electrode, the second modulation electrode, and the third modulation electrode on the first modulation arm and the second modulation arm is improved. Therefore, modulation efficiency of the electro-optical modulator is improved.

In some implementations, the transparent conduction layer is in direct contact with the first modulation arm and the second modulation arm.

In this way, the distance between the transparent conduction layer and the first modulation arm and the distance between the transparent conduction layer and the second modulation arm are 0, the impact of the first electric field and the second electric field that is generated by the first modulation electrode, the second modulation electrode, and the third modulation electrode on the first modulation arm and the second modulation arm is greater, and the modulation efficiency of the electro-optical modulator is higher.

In some implementations, the electro-optical modulator further includes a first impedance sheet, a second impedance sheet, and a third impedance sheet. The first impedance sheet and the second impedance sheet are connected in series to each other and then are coupled between the second modulation electrode and the third modulation electrode. The first modulation electrode is coupled to a node between the first impedance sheet and the second impedance sheet. The third impedance sheet is coupled between the first modulation electrode and the node.

In this way, the first modulation signal and the second modulation signal may be terminated via the first impedance sheet, the second impedance sheet, and the third impedance sheet, to avoid a case in which the first modulation signal and the second modulation signal are reflected, and consequently a modulation process of the input light is affected.

In some implementations, the first modulation signal and the second modulation signal are radio frequency signals.

In some implementations, the first modulation arm and the second modulation arm are made of lithium niobate.

According to a second aspect, this application further provides an optical modulation system, including: the electro-optical modulator according to any one of the implementations of the first aspect; and an electrical chip, separately coupled to a first input electrode and a second input electrode, and configured to output a first modulation signal to the first input electrode and output a second modulation signal to the second input electrode.

The optical modulation system includes the electrical chip and an optical chip that are electrically connected to each other. An electrode conversion portion in the optical chip is used, so that a peripheral circuit is not needed to distinguish between a transmission channel of a direct current signal and a transmission channel of an alternating current signal. This helps reduce a size of the optical modulation system and reduce costs of the optical modulation system.

Currently, there are mainly two driving manners in which the electrical chip drives the electro-optical modulator to work. The electrical chip has different circuit structures in the two driving manners. In Manner 1, the electrical chip has three output ends electrically connected to the electro-optical modulator. One output end outputs a modulation signal that changes with time, and two other output ends each maintain a ground voltage. In this driving manner, the electrical chip includes the peripheral circuit for separately filtering out the direct current signal and the alternating current signal. In Manner 2, the electrical chip has two output ends electrically connected to the electro-optical modulator. The two output ends respectively output the first modulation signal and the second modulation signal. The first modulation signal and the second modulation signal separately change with time, and at a same moment, the first modulation signal and the second modulation signal have a same amplitude and opposite directions. In this driving manner, the electrical chip does not include a peripheral circuit. The electro-optical modulator includes the electrode conversion portion. The first input electrode and the second input electrode are converted into a first modulation electrode, a second modulation electrode, and a third modulation electrode, so that signals transmitted on the first input electrode and the second input electrode may be separately loaded to an optical modulation portion via the first modulation electrode, the second modulation electrode, and the third modulation electrode, to modulate input light in a first modulation arm and a second modulation arm. Therefore, the electro-optical modulator may be driven in Manner 2. In other words, the electrical chip that does not include the peripheral circuit for filtering out the direct current signal and the alternating current signal may be used to drive the electro-optical modulator. This enables the overall size of the optical modulation system to be small, and helps reduce the costs of the optical modulation system.

According to a third aspect, this application further provides an integrated optical chip, including: a laser, configured to emit input light; and the electro-optical modulator according to any one of the foregoing implementations, coupled to the laser, and configured to receive the input light, modulate the input light, and output modulated light.

The integrated optical chip integrates the electro-optical modulator, and can implement all beneficial effects of the electro-optical modulator.

### BRIEF DESCRIPTION OF DRAWINGS

FIG. 1 is a schematic diagram of a module structure of an optical modulation system according to Embodiment 1 of this application;
FIG. 2 is a schematic diagram of a planar structure of an electro-optical modulator in FIG. 1;
FIG. 3 is a schematic diagram of a cross-sectional structure of an electrode conversion portion in FIG. 2 along a line A-A;
FIG. 4 is a schematic diagram of a cross-sectional structure of an optical modulation portion in FIG. 2 along a line B-B;
FIG. 5 is a schematic diagram of a cross-sectional structure of an electro-optical modulator along a line B-B in FIG. 2 according to a changed embodiment of Embodiment 1 of this application;
FIG. 6 is an equivalent circuit diagram of an electro-optical modulator and an electrical chip according to Embodiment 1 of this application;
FIG. 7 is a schematic diagram of a module structure of an integrated optical chip according to Embodiment 1 of this application;
FIG. 8 is a schematic diagram of a module structure of an integrated optical chip according to a changed embodiment of Embodiment 1 of this application;
FIG. 9 is a schematic diagram of a module structure of an integrated optical chip according to a changed embodiment of Embodiment 1 of this application;
FIG. 10 is a schematic diagram of a module structure of an integrated optical chip according to a changed embodiment of Embodiment 1 of this application;
FIG. 11 is a schematic diagram of a local planar structure of an electro-optical modulator in an optical modulation system according to Embodiment 2 of this application; and
FIG. 12 is a schematic diagram of a cross-sectional structure of FIG. 11 along a line C-C.

### DESCRIPTION OF EMBODIMENTS

The following describes embodiments of this application with reference to the accompanying drawings in embodiments of this application.

### Embodiment 1

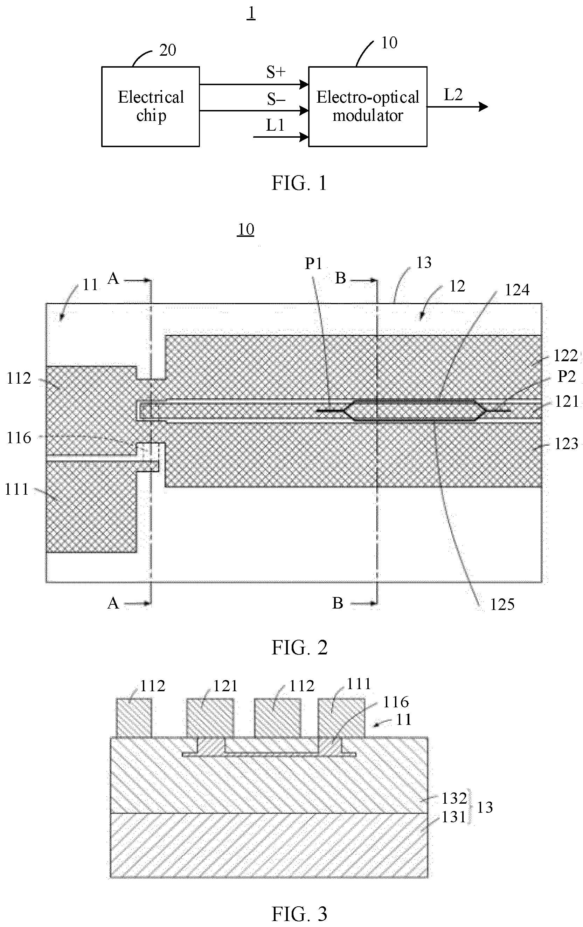

Refer to FIG. 1. In this embodiment, an optical modulation system 1 includes an electro-optical modulator 10 and an electrical chip 20, and the electro-optical modulator 10 is coupled to the electrical chip 20. The electrical chip 20 is configured to output a first modulation signal S+ and a second modulation signal S- to the electro-optical modulator 10. The first modulation signal S+ and the second modulation signal S- are high-frequency (frequency greater than 10 kHz) alternating current signals. At a same moment, the first modulation signal S+ and the second modulation signal S- that are output by the electrical chip 20 have an equal amplitude and opposite directions. The electro-optical modulator 10 is further configured to receive input light L1 from an external light source (for example, a laser), and the electro-optical modulator 10 is configured to modulate the input light L1 based on the first modulation signal S+ and the second modulation signal S-, to output modulated input light. In this embodiment, light modulated and output by the electro-optical modulator 10 is defined as modulated light L2. The input light L1 is intrinsic light. The electro-optical modulator 10 loads the first modulation signal S+ and the second modulation signal S- to the input light L1, changes a related parameter (for example, a phase, an intensity, and a polarization state) of the input light L1, to obtain the modulated light L2 that carries modulation information, and output the modulated light L2. In this embodiment, the electro-optical modulator 10 is a thin-film lithium niobate modulator.

Refer to FIG. 2. In this embodiment, the electro-optical modulator 10 includes an electrode conversion portion 11, an optical modulation portion 12, and a substrate 13, and the electrode conversion portion 11 and the optical modulation portion 12 are on a same surface of the substrate 13. The electrode conversion portion 11 is respectively coupled to the electrical chip 20 and the optical modulation portion 12, and is configured to receive the first modulation signal S+ and the second modulation signal S-, and transmit the first modulation signal S+ and the second modulation signal S- to the optical modulation portion 12. The optical modulation portion 12 is configured to receive the first modulation signal S+, the second modulation signal S-, and the input light L1, and is configured to modulate the input light L1 based on the first modulation signal S+ and the second modulation signal S-, to output the modulated light L2.

The electrode conversion portion 11 includes a first input electrode 111 and a second input electrode 112 that are disposed at intervals. The first input electrode 111 and the second input electrode 112 are separately coupled to the electrical chip 20. The first input electrode 111 is configured to receive the first modulation signal S+ output by the electrical chip 20, and the second input electrode 112 is configured to receive the second modulation signal S- output by the electrical chip 20.

The optical modulation portion 12 includes a first modulation electrode 121, a second modulation electrode 122, a third modulation electrode 123, a first modulation arm 124, and a second modulation arm 125. The first modulation electrode 121, the second modulation electrode 122, and the third modulation electrode 123 are disposed at intervals and parallel to each other, and the first modulation electrode 121 is between the second modulation electrode 122 and the third modulation electrode 123. When an electrical signal is separately applied to the first modulation electrode 121, the second modulation electrode 122, and the third modulation electrode 123, the first modulation electrode 121 and the second modulation electrode 122 form a first capacitor to generate a first electric field; and the first modulation electrode 121 and the third modulation electrode 123 form a second capacitor to generate a second electric field.

The first modulation arm 124 is between the first modulation electrode 121 and the second modulation electrode 122, and the second modulation arm 125 is between the first modulation electrode 121 and the third modulation electrode 123. The first modulation arm 124 and the second modulation arm 125 converge at an input end P1 and an output end P2. In other words, the first modulation arm 124 and the second modulation arm 125 have the common input end P1 and the common output end P2. The input end P1 is configured to receive the input light L1. Apart of the input light L1 enters the first modulation arm 124 for transmission and modulation, and the other part enters the second modulation arm 125 for transmission and modulation. When the electrical signal is separately applied to the first modulation electrode 121, the second modulation electrode 122, and the third modulation electrode 123, the first modulation arm 124 is in the first electric field, the part of the input light L1 transmitted in the first modulation arm 124 is modulated by the first electric field, and the other part of the input light L1 transmitted in the second modulation arm 125 is modulated by the second electric field. The input light L1 modulated by the first modulation arm 124 and the second modulation arm 125 converges at the output end P2, and then is output as the modulated light L2.

The first modulation electrode 121, the second modulation electrode 122, and the third modulation electrode 123 are disposed at intervals and approximately parallel to each other, and the first modulation electrode 121 is between the second modulation electrode 122 and the third modulation electrode 123. The first modulation electrode 121 is coupled to the first input electrode 111, and is configured to receive the first modulation signal S+. The second modulation electrode 122 and the third modulation electrode 123 are separately coupled to the second input electrode 112, and are separately configured to receive the second modulation signal S-. The first modulation electrode 121, the second modulation electrode 122, and the third modulation electrode 123 are configured to modulate the input light L1 based on the first modulation signal S+ and the second modulation signal S-.

Refer to FIG. 3. The substrate 13 includes a substrate layer 131 and a dielectric layer 132 that are stacked, and the substrate layer 131 is on a surface that is of the dielectric layer 132 and that is away from the electrode conversion portion 11 and the optical modulation portion 12. In other words, the dielectric layer 132 has two opposite surfaces, the electrode conversion portion 11 and the optical modulation portion 12 are on one of the two surfaces, and the substrate layer 131 is on the other surface. In this embodiment, a material of the substrate layer 131 is silicon (Si), and a material of the dielectric layer 132 is silicon dioxide (SiO₂). In another embodiment, a material of the substrate layer 131 may alternatively be indium phosphate (InP), gallium arsenide (GaAs), a combination thereof, or the like, and a material of the dielectric layer 132 may alternatively be silicon (Si), silicon nitride (SiN), silicon oxide (SiO₂), benzocyclobutene (BCB), a combination thereof, or the like.

Refer to FIG. 2 and FIG. 3 together. In this embodiment, the electrode conversion portion 11 further includes a bridging portion 116. The first input electrode 111, the second input electrode 112, the first modulation electrode 121, the second modulation electrode 122, and the third modulation electrode 123 are all disposed on a surface that is of the dielectric layer 132 and that is away from the substrate layer 131. The bridging portion 116 is embedded in the dielectric layer 132 and a part of the bridge portion is exposed relative to the surface that is of the dielectric layer 132 and that is away from the substrate layer 131. The part of the bridging portion 116 exposed relative to the surface of the dielectric layer 132 is separately coupled to the first input electrode 111 and the first modulation electrode 121, to establish an electrical connection between the first input electrode 111 and the first modulation electrode 121.

Because the first input electrode 111, the second input electrode 112, the first modulation electrode 121, the second modulation electrode 122, and the third modulation electrode 123 are all disposed on the surface that is of the dielectric layer 132 and that is away from the substrate layer 131, if the electrical connection between the first input electrode 111 and the first modulation electrode 121 is established directly via a conduction structure disposed on the surface that is of the dielectric layer 132 and that is away from the substrate layer 131, the first input electrode 111 and the second input electrode 112 are easily short-circuited. If a manner of adding an insulation layer is used to avoid short-circuiting, it is not conducive to reduction of overall thickness of the electro-optical modulator 10. In this way, the bridging portion 116 is embedded in the dielectric layer 132 to establish the electrical connection between the first input electrode 111 and the first modulation electrode 121. This helps avoid short-circuiting between the first input electrode 111 and the second input electrode 112, and further helps reduce the overall thickness of the electro-optical modulator 10.

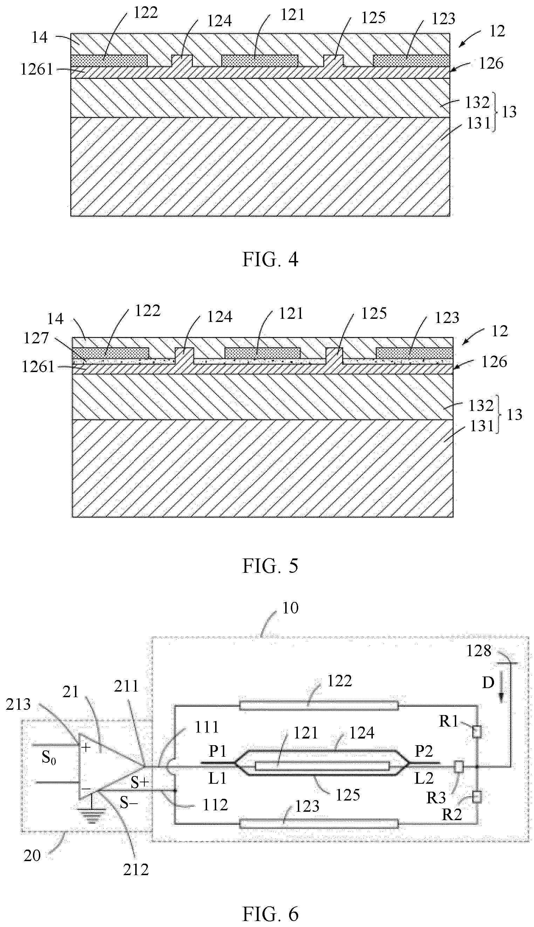

Refer to FIG. 4. In this embodiment, the first modulation electrode 121, the second modulation electrode 122, the third modulation electrode 123, the first modulation arm 124, and the second modulation arm 125 are disposed on the surface that is of the dielectric layer 132 and that is away from the substrate layer 131. The optical modulation portion 12 further includes an optical waveguide 126, and the optical waveguide 126 is in direct contact with the surface that is of the dielectric layer 132 and that is away from the substrate layer 131. The optical waveguide 126 includes a base 1261 and the first modulation arm 124 and the second modulation arm 125 that protrude from a surface of the base 1261 towards a direction away from the dielectric layer 132. The first modulation electrode 121, the second modulation electrode 122, and the third modulation electrode 123 are on the surface that is of the base 1261 and that is away from the dielectric layer 132. In this embodiment, the base 1261, the first modulation arm 124, and the second modulation arm 125 are all made of lithium niobate. In another embodiment, the optical waveguide 126 may alternatively not include a base 1261.

In this embodiment, the first input electrode 111, the second input electrode 112, the first modulation electrode 121, the second modulation electrode 122, and the third modulation electrode 123 are all made of conducting metal, for example, gold, aluminum, copper, titanium, and platinum.

Refer to FIG. 5. In a changed embodiment, the optical modulation portion 12 further includes a transparent conduction layer 127. The transparent conduction layer 127 is disposed on the surface that is of the base 1261 and that is away from the dielectric layer 132, and partly covers the surface that is of the base 1261 and that is away from the dielectric layer 132. The first modulation arm 124 and the second modulation arm 125 are exposed relative to the transparent conduction layer 127. In other words, the transparent conduction layer 127 is between the base 1261 and the first modulation electrode 121, the second modulation electrode 122, and the third modulation electrode 123. The transparent conduction layer 127 may be a transparent conducting oxide (TCO) film, for example, an indium tin oxide (ITO) film, a tungsten-doped indium oxide (IWO) film, or the like.

In this embodiment, the first modulation electrode 121, the second modulation electrode 122, and the third modulation electrode 123 are made of metal materials, and the metal materials easily absorb the input light L1 in the first modulation arm 124 and the second modulation arm 125. To reduce an absorption amount of the input light L1 by the first modulation electrode 121, the second modulation electrode 122, and the third modulation electrode 123, a preset distance should be kept between the first modulation electrode 121, the second modulation electrode 122, and the third modulation electrode 123 and the first modulation arm 124 and the second modulation arm 125 that are adjacently arranged, as shown in FIG. 4.

Compared with a metal material, a transparent conducting material has a small absorption function on light. If the first modulation electrode 121, the second modulation electrode 122, and the third modulation electrode 123 are set to be made of transparent conducting materials, absorption functions of the first modulation electrode 121, the second modulation electrode 122, and the third modulation electrode 123 on the light can be reduced, and the preset distance between the first modulation electrode 121, the second modulation electrode 122, and the third modulation electrode 123, and the first modulation arm 124 and the second modulation arm 125 can be reduced. However, compared with the metal material, the transparent conducting material has a weak conductivity. This is not conducive to conduction of electrical signals (including the first modulation signal S+ and the second modulation signal S-).

Therefore, in the foregoing changed embodiment, the first modulation electrode 121, the second modulation electrode 122, and the third modulation electrode 123 are set to be made of the metal materials, and the transparent conduction layer 127 is added, to enable the transparent conduction layer 127 and the first modulation electrode 121, the second modulation electrode 122, and the third modulation electrode 123 to jointly transmit the electrical signals. In an aspect, a good conductivity may be implemented via the first modulation electrode 121, the second modulation electrode 122, and the third modulation electrode 123 that are made of the metal materials. In another aspect, because the transparent conduction layer 127 has a small absorption function on the light, a distance between the transparent conduction layer 127 and the first modulation arm 124 and a distance between the transparent conduction layer 127 and the second modulation arm 125 can be reduced. In this changed embodiment (FIG. 6), the transparent conduction layer 127 is in direct contact with the first modulation arm 124 and the second modulation arm 125. In other words, the distance between the transparent conduction layer 127 and the first modulation arm 124 and the distance between the transparent conduction layer 127 and the second modulation arm 125 are 0.

When the distance between the transparent conduction layer 127 and the first modulation arm 124 and the distance between the transparent conduction layer 127 and the second modulation arm 125 are reduced, impact of the first electric field and the second electric field that is generated by the first modulation electrode 121, the second modulation electrode 122, and the third modulation electrode 123 on the first modulation arm 124 and the second modulation arm 125 is greater, and modulation efficiency of the electro-optical modulator 10 is higher.

Therefore, in this changed embodiment, the transparent conduction layer 127 is added, to help improve the modulation efficiency of the electro-optical modulator 10 while ensuring the good conductivity.

Refer to FIG. 4 and FIG. 5. In this embodiment, the electro-optical modulator 10 further includes an insulation coverage layer 14. Materials of the insulation coverage layer 14 and the dielectric layer 132 are the same. The insulation coverage layer 14 covers surfaces that are of the electrode conversion portion 11 and the optical modulation portion 12 and that are away from the substrate 13, and is configured to electrically insulate the electrode conversion portion 11 and the optical modulation portion 12 from an external conduction structure, and protect the electrode conversion portion 11 and the optical modulation portion 12 from being scratched. In this embodiment, the insulation coverage layer 14 is not shown in some accompanying drawings to better show structures of the electrode conversion portion 11 and the optical modulation portion 12.

The following describes a working process of the optical modulation system 1 with reference to an equivalent circuit diagram of the electro-optical modulator 10 and the electrical chip 20.

Refer to FIG. 6. In this embodiment, the electrical chip 20 includes an amplifier 21, and the amplifier 21 has a first output end 211 and a second output end 212. The first output end 211 is coupled to the first input electrode 111, and the second output end 212 is coupled to the second input electrode 112. A positive-phase input end 213 of the amplifier 21 is configured to receive an initial modulation signal S₀, and the amplifier 21 is configured to amplify an amplitude of the initial modulation signal S₀, and separately output the first modulation signal S+ from the first output end 211, and output the second modulation signal S- from the second output end 212. The electro-optical modulator 10 includes a drive end 128. The drive end 128 is in a floating connection state, and is configured to receive a direct current drive signal D. The drive end 128 is a signal input pin on the electro-optical modulator 10. In a working process of the electro-optical modulator 10, a leading wire outside the electro-optical modulator 10 may be connected to the drive end 128, to input a drive signal D for the drive end 128. The drive end 128 is separately coupled to the first modulation electrode 121, the second modulation electrode 122, and the third modulation electrode 123, and is configured to transmit the drive signal D to the amplifier 21 via the first modulation electrode 121, the second modulation electrode 122, and the third modulation electrode 123. In other words, the drive end 128 is configured to transmit the drive signal D to the electrical chip 20, to drive the electrical chip 20 to start to work. In this embodiment, the first modulation electrode 121, the second modulation electrode 122, and the third modulation electrode 123 form a capacitor, so that the direct current drive signal D does not flow the capacitor between the first modulation electrode 121, the second modulation electrode 122, and the third modulation electrode 123, but is transmitted to the electrical chip 20 only on the first modulation electrode 121, the second modulation electrode 122, and the third modulation electrode 123. In this way, transmission channels of alternating current modulation signals (including the first modulation signal and the second modulation signal) and the direct current drive signal D may be distinguished.

When starting to work, the electrical chip 20 receives the initial modulation signal S₀, outputs the first modulation signal S+ through the first output end 211, and outputs the second modulation signal S- through the second output end 212. The first modulation signal S+ is transmitted by the first input electrode 111 to the first modulation electrode 121, and the second modulation signal S- is separately transmitted by the second input electrode 112 to the second modulation electrode 122 and the third modulation electrode 123. At the same time, the input end P1 of the optical modulation portion 12 receives the input light L1 input by the external light source.

In this embodiment, the first modulation signal S+ and the second modulation signal S- are sinusoidal signals. In another embodiment, the first modulation signal S+ and the second modulation signal S- may alternatively be alternating current signals in other forms, for example, square wave signals. Specific forms of the first modulation signal S+ and the second modulation signal S- are not limited in this application. In a working process of the optical modulation portion 12, at a same moment, the first modulation signal S+ and the second modulation signal S- have a same amplitude and opposite directions. By changing the first modulation signal S+ and the second modulation signal S- at the same time, the first electric field and the second electric field may be changed respectively, to respectively control the first modulation arm 124 and the second modulation arm 125 in the first electric field and the second electric field to modulate the input light L1, to output the modulated light L2. In other words, in the foregoing process, changes of the first modulation signal S+ and the second modulation signal S- are reflected in a change of a parameter (for example, a phase, an intensity, or a polarization state) of light, so that modulated light, namely, the modulated light L2, carries modulation information.

In this embodiment, the optical modulation portion 12 further includes a first impedance sheet R1, a second impedance sheet R2, and a third impedance sheet R3 that are on the surface of the substrate 13. The first impedance sheet R1, the second impedance sheet R2, and the third impedance sheet R3 each are a material layer having a specific impedance value, for example, a material layer made of titanium. The first impedance sheet R1 and the second impedance sheet R2 are coupled between one end of the second modulation electrode 122 and one end of the third modulation electrode 123, and the first impedance sheet R1 and the second impedance sheet R2 are coupled to the ends that are of the second modulation electrode 122 and the third modulation electrode 123 and that are close to the output end P2. A node between the first impedance sheet R1 and the second impedance sheet R2 is coupled to the drive end 128 and one end of the first modulation electrode 121, and the third impedance sheet R3 is coupled between the first modulation electrode 121 and the node. The first impedance sheet R1, the second impedance sheet R2, and the third impedance sheet R3 are separately configured to terminate the first modulation signal S+ and the second modulation signal S- that are high-frequency signals and that are transmitted on the first modulation electrode 121, the second modulation electrode 122, and the third modulation electrode 123, to avoid a case in which the first modulation signal S+ and the second modulation signal S- are reflected, and consequently a modulation process of the input light L1 is affected.

As described above, the electro-optical modulator 10 in this embodiment is configured to receive the first modulation signal S+ and the second modulation signal S- output by the electrical chip 20. The electro-optical modulator 10 is further configured to receive the input light L1, and is configured to modulate the input light L1 based on the first modulation signal S+ and the second modulation signal S-, to output the modulated light L2. The first modulation signal S+ and the second modulation signal S- are the alternating current signals. the electrical chip 20 needs to work under driving of the direct current drive signal D.

Currently, there are mainly two driving manners in which the electrical chip drives the electro-optical modulator to work. The electrical chip has different circuit structures in the two driving manners.

In Manner 1, the electrical chip has three output ends coupled to the electro-optical modulator. One output end outputs a modulation signal that changes with time, and two other output ends each maintain a ground voltage. In this driving manner, the electrical chip includes a peripheral circuit for separately filtering out a direct current signal and an alternating current signal. This manner is also referred to as a signal transmission manner of a coplanar waveguide-based (CPW) electrode structure.

In Manner 2, the electrical chip has two output ends coupled to the electro-optical modulator. The two output ends respectively output the first modulation signal and the second modulation signal. The first modulation signal and the second modulation signal separately change with time, and at a same moment, the first modulation signal and the second modulation signal have a same amplitude and opposite directions. In this driving manner, the electrical chip does not include a peripheral circuit. This manner is also referred to as a signal transmission manner of a coplanar strip-based (CPS) electrode structure.

The electro-optical modulator 10 in this embodiment includes the electrode conversion portion 11. The first input electrode 111 and the second input electrode 112 are converted into the first modulation electrode 121, the second modulation electrode 122, and the third modulation electrode 123, so that signals transmitted on the first input electrode 111 and the second input electrode 112 may be separately loaded to the first modulation electrode 121, the second modulation electrode 122, and the third modulation electrode 123 that are of the optical modulation portion 12, to modulate the input light L1 in the first modulation arm 124 and the second modulation arm 125. In other words, in this embodiment, the electro-optical modulator 10 converts the CPS-based electrode structure into the CPW-based electrode structure, so that when the electro-optical modulator 10 is coupled to the electrical chip 20 for working, the electro-optical modulator 10 may be driven in Manner 2. In other words, the electrical chip 20 that does not include the peripheral circuit for filtering out the direct current signal and the alternating current signal may be used to drive the electro-optical modulator 10. This enables an overall size of the optical modulation system 1 to be small, helps reduce costs of the optical modulation system 1, and facilitates packaging of the electro-optical modulator 10 and the electrical chip 20 in the optical modulation system 1.

On this basis, because the second modulation electrode 122 and the third modulation electrode 123 form a capacitor, the drive signal D input at the drive end 128 of the electro-optical modulator 10 is filtered out by the capacitor, and is not transmitted on the second modulation electrode 122 and the third modulation electrode 123. The drive signal D is loaded to the electrical chip 20 only along a path of the first modulation electrode 121.

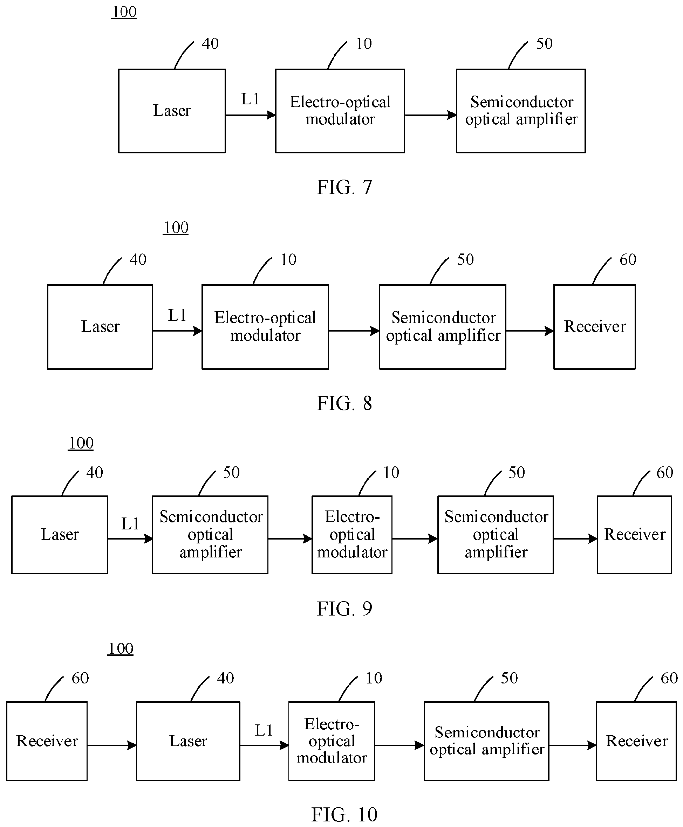

Refer to FIG. 7. This embodiment further provides an integrated optical chip 100. The integrated optical chip 100 includes at least one electro-optical modulator 10, one laser 40, and one semiconductor optical amplifier 50 (SOA). The laser 40 is coupled to the electro-optical modulator 10. The laser 40 is configured to output the input light L1 to the electro-optical modulator 10. The electro-optical modulator 10 is coupled to the semiconductor optical amplifier 50, and is configured to modulate the input light L1 and output the modulated light L2 to the semiconductor optical amplifier 50. The semiconductor optical amplifier 50 is configured to amplify the modulated light L2 and output amplified modulated light L2. The output modulated light L2 may continue to be propagated in an optical fiber, and may be received by a device such as a modulator or a detector in a subsequent optical path.

In some changed embodiments, a specific structure of the integrated optical chip 100 may alternatively be shown in FIG. 8 to 10.

Compared with the integrated optical chip in FIG. 7, an integrated optical chip 100 in FIG. 8 further includes a receiver 60 coupled to the semiconductor optical amplifier 50. The receiver 60 is configured to receive the amplified modulated light L2 output by the semiconductor optical amplifier 50, generate a corresponding electrical signal based on the amplified modulated light L2, and output the electrical signal.

Compared with the integrated optical chip in FIG. 8, an integrated optical chip 100 in FIG. 9 further includes a semiconductor optical amplifier 50 coupled between the laser 40 and the electro-optical modulator 10. The semiconductor optical amplifier 50 between the laser 40 and the electro-optical modulator 10 is configured to receive laser light output by the laser 40, amplify the laser light, and output amplified laser light as the input light L1 to the electro-optical modulator 10.

Compared with the integrated optical chip in FIG. 9, an integrated optical chip 100 in FIG. 10 further includes a receiver 60 coupled to the laser 40. The receiver 60 is configured to demodulate the modulated light L2, to obtain modulation information carried in the modulated light L2.

The integrated optical chips 100 shown in FIG. 7 to FIG. 10 integrate the foregoing electro-optical modulator 10 in this embodiment, and can implement all beneficial effects of the foregoing electro-optical modulator 10.

### Embodiment 2

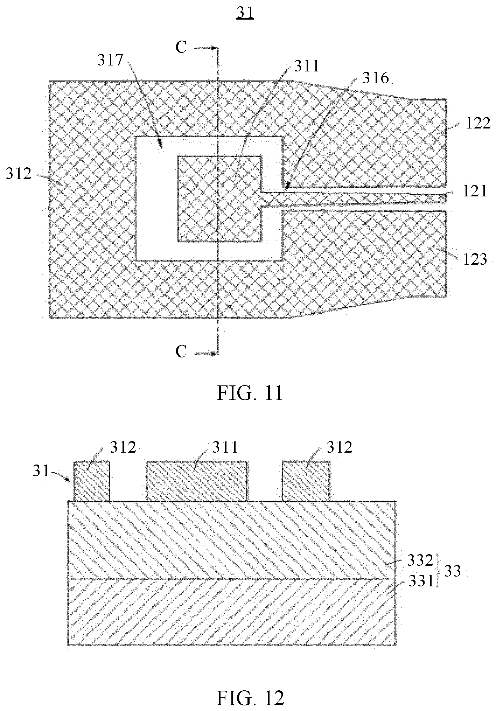

Refer to FIG. 11 and FIG. 12 together. An optical modulation system in this embodiment includes an electro-optical modulator, where the electro-optical modulator includes an electrode conversion portion 31. The optical modulation system in this embodiment differs from the optical modulation system 1 in Embodiment 1 in that a structure of the electrode conversion portion 31 is different from a structure of the electrode conversion portion 11 in Embodiment 1.

In this embodiment, the electrode conversion portion 31 includes a first input electrode 311 and a second input electrode 312 that are disposed at intervals. The first input electrode 311 and the second input electrode 312 are separately coupled to an electrical chip. The first input electrode 311 is configured to receive a first modulation signal S+, and the second input electrode 312 is configured to receive a second modulation signal S- output by the electrical chip 20.

Two ends of the second input electrode 312 are respectively coupled to a second modulation electrode 122 and a third modulation electrode 123. In other words, the second modulation electrode 122, the second input electrode 312, and the third modulation electrode 123 are sequentially coupled in a head-to-tail manner. The second modulation electrode 122, the second input electrode 312, and the third modulation electrode 123 are enclosed to form an accommodation area 317 having an opening 316. The first input electrode 311 is in the accommodation area 317. A first modulation electrode 121 extends from outside of the accommodation area 317 through the opening 316 to the accommodation area 317, and is coupled to the first input electrode 311. In this embodiment, the electrode conversion portion 31 is an axisymmetric structure as a whole. Specifically, the electrode conversion portion 31 is axisymmetric relative to the first modulation electrode 121. The electrode conversion portion 31 is set to be axisymmetric. This helps ensure symmetry between the first modulation signal S+ and the second modulation signal S-.

The first modulation electrode 121 is coupled to the first input electrode 311, and is configured to receive the first modulation signal S+. The second modulation electrode 122 and the third modulation electrode 123 are separately coupled to the second input electrode 312, and are separately configured to receive the second modulation signal S-.

In this embodiment, the electro-optical modulator further includes a substrate 33. The electrode conversion portion 31 and an optical modulation portion are on a same surface of the substrate 33. The substrate 33 includes a substrate layer 331 and a dielectric layer 332 that are stacked, and the substrate layer 331 is on a surface that is of the dielectric layer 332 and that is away from the electrode conversion portion 31. In this embodiment, a material of the substrate 33 is the same as the material of the substrate 13 in Embodiment 1. Details are not described again.

The electro-optical modulator in this embodiment can implement all beneficial effects of the electro-optical modulator 10 in Embodiment 1.

It should be noted that the foregoing descriptions are merely specific implementations of this application, but are not intended to limit the protection scope of this application. Any variation or replacement easily figured out by a person skilled in the art within the technical scope disclosed in this application shall fall within the protection scope of this application. In a case that no conflict occurs, the implementations of this application and the features in the implementations may be mutually combined. Therefore, the protection scope of this application shall be subject to the protection scope of the claims.

## Claims

1. An electro-optical modulator (10), comprising:
an electrode conversion portion (11, 31), comprising:
a first input electrode (111, 311) and a second input electrode (112, 312), wherein the first input electrode (111, 311) is configured to receive a first modulation signal (S+) output by an electrical chip, and the second input electrode (112, 312) is configured to receive a second modulation signal (S-) output by the electrical chip; and
an optical modulation portion (12), comprising:
a first modulation electrode (121), a second modulation electrode (122), a third modulation electrode (123), a first modulation arm (124), and a second modulation arm (125), wherein the first modulation electrode (121) is between the second modulation electrode (122) and the third modulation electrode (123), the first modulation arm (124) is between the first modulation electrode (121) and the second modulation electrode (122), and the second modulation arm (125) is between the first modulation electrode (121) and the third modulation electrode (123), wherein
the first modulation electrode (121) is coupled to the first input electrode (111, 311), and is configured to receive the first modulation signal (S+), the second modulation electrode (122) and the third modulation electrode (123) are separately coupled to the second input electrode (112, 312), and are separately configured to receive the second modulation signal (S-), the first modulation electrode (121), the second modulation electrode (122), and the third modulation electrode (123) are configured to modulate input light (L1) in the first modulation arm (124) and the second modulation arm (125) based on the first modulation signal (S+) and the second modulation signal (S-), and modulated input light is output as modulated light (L2) from the first modulation arm (124) and the second modulation arm (125),
wherein the electro-optical modulator (10) further comprises a substrate (13, 33), and the electrode conversion portion (11, 31) and the optical modulation portion (12) are on a same surface of the substrate (13, 33),
**characterized in that**
the electrode conversion portion (11) further comprises a bridging portion (116), the bridging portion (116) is embedded in the substrate (13), and a part of the bridging portion (116) is exposed relative to the surface that is of the substrate (13) and on which the electrode conversion portion (11) is located; and
the part of the bridging portion (116) exposed relative to the substrate (13) is separately coupled to the first modulation electrode (121) and the first input electrode (111).

2. An electro-optical modulator (10), comprising:
an electrode conversion portion (11, 31), comprising:
a first input electrode (111, 311) and a second input electrode (112, 312), wherein the first input electrode (111, 311) is configured to receive a first modulation signal (S+) output by an electrical chip, and the second input electrode (112, 312) is configured to receive a second modulation signal (S-) output by the electrical chip; and
an optical modulation portion (12), comprising:
a first modulation electrode (121), a second modulation electrode (122), a third modulation electrode (123), a first modulation arm (124), and a second modulation arm (125), wherein the first modulation electrode (121) is between the second modulation electrode (122) and the third modulation electrode (123), the first modulation arm (124) is between the first modulation electrode (121) and the second modulation electrode (122), and the second modulation arm (125) is between the first modulation electrode (121) and the third modulation electrode (123), wherein
the first modulation electrode (121) is coupled to the first input electrode (111, 311), and is configured to receive the first modulation signal (S+), the second modulation electrode (122) and the third modulation electrode (123) are separately coupled to the second input electrode (112, 312), and are separately configured to receive the second modulation signal (S-), the first modulation electrode (121), the second modulation electrode (122), and the third modulation electrode (123) are configured to modulate input light (L1) in the first modulation arm (124) and the second modulation arm (125) based on the first modulation signal (S+) and the second modulation signal (S-), and modulated input light is output as modulated light (L2) from the first modulation arm (124) and the second modulation arm (125),
wherein the electro-optical modulator (10) further comprises a substrate (13, 33), and the electrode conversion portion (11, 31) and the optical modulation portion (12) are on a same surface of the substrate (13, 33),
**characterized in that**
two ends of the second input electrode (312) are respectively coupled to the second modulation electrode (122) and the third modulation electrode (123), and the second modulation electrode (122), the second input electrode (312), and the third modulation electrode (123) are enclosed to form an accommodation area (317) having an opening (316); and
the first input electrode (311) is in the accommodation area (317), and the first modulation electrode (121) extends from outside of the accommodation area (317) through the opening (316) to the accommodation area (317) and is coupled to the first input electrode (311).

3. The electro-optical modulator (10) according to claim 2, wherein the electrode conversion portion (31) is an axisymmetric structure.

4. The electro-optical modulator (10) according to any one of claims 1 to 3, wherein the first modulation electrode (121), the second modulation electrode (122), and the third modulation electrode (123) are made of metal; and
the optical modulation portion (12) further comprises a transparent conduction layer (127) on the substrate (13, 33), and the first modulation electrode (121), the second modulation electrode (122), and the third modulation electrode (123) are on a surface that is of the transparent conduction layer (127) and that is away from the substrate (13, 33), and are in electrical contact with the transparent conduction layer (127).

5. The electro-optical modulator (10) according to claim 4, wherein the transparent conduction layer (127) is in direct contact with the first modulation arm (124) and the second modulation arm (125).

6. The electro-optical modulator (10) according to claim 4 or 5, further comprising a first impedance sheet (R1), a second impedance sheet (R2), and a third impedance sheet (R3); wherein
the first impedance sheet (R1) and the second impedance sheet (R2) are connected in series to each other and then are coupled between the second modulation electrode (122) and the third modulation electrode (123), the first modulation electrode (121) is coupled to a node between the first impedance sheet (R1) and the second impedance sheet (R2), and the third impedance sheet (R3) is coupled between the first modulation electrode (121) and the node.

7. The electro-optical modulator (10) according to any one of claims 1 to 6, wherein the first modulation signal (S+) and the second modulation signal (S-) are radio frequency signals.

8. The electro-optical modulator (10) according to any one of claims 1 to 7, wherein the first modulation arm (124) and the second modulation arm (125) are made of lithium niobate.

9. An optical modulation system (1), comprising:
the electro-optical modulator (10) according to any one of claims 1 to 8; and
an electrical chip (20), separately coupled to a first input electrode (111, 311) and a second input electrode (112, 312), and configured to output a first modulation signal (S+) to the first input electrode (111, 311), and output a second modulation signal (S-) to the second input electrode (112, 312).

10. An integrated optical chip (100), comprising:
a laser (40), configured to emit input light (L1); and
the electro-optical modulator (10) according to any one of claims 1 to 8, coupled to the laser (40), and configured to receive the input light (L1), modulate the input light (L1), and output modulated light (L2).

## Patentansprüche

1. Elektrooptischer Modulator (10), umfassend:
einen Elektrodenumwandlungsabschnitt (11, 31), umfassend:
eine erste Eingangselektrode (111, 311) und eine zweite Eingangselektrode (112, 312), wobei die erste Eingangselektrode (111, 311) dazu konfiguriert ist, ein erstes Modulationssignal (S+) zu empfangen, das durch einen elektrischen Chip ausgegeben wird, und die zweite Eingangselektrode (112, 312) dazu konfiguriert ist, ein zweites Modulationssignal (S-) zu empfangen, das durch den elektrischen Chip ausgegeben wird; und einen optischen Modulationsabschnitt (12), umfassend:
eine erste Modulationselektrode (121), eine zweite Modulationselektrode (122), eine dritte Modulationselektrode (123), einen ersten Modulationsarm (124) und einen zweiten Modulationsarm (125), wobei die erste Modulationselektrode (121) zwischen der zweiten Modulationselektrode (122) und der dritten Modulationselektrode (123) liegt, der erste Modulationsarm (124) zwischen der ersten Modulationselektrode (121) und der zweiten Modulationselektrode (122) liegt, und der zweite Modulationsarm (125) zwischen der ersten Modulationselektrode (121) und der dritten Modulationselektrode (123) liegt, wobei
die erste Modulationselektrode (121) mit der ersten Eingangselektrode (111, 311) gekoppelt ist und dazu konfiguriert ist, das erste Modulationssignal (S+) zu empfangen, die zweite Modulationselektrode (122) und die dritte Modulationselektrode (123) getrennt mit der zweiten Eingangselektrode (112, 312) gekoppelt sind und getrennt dazu konfiguriert sind, das zweite Modulationssignal (S-) zu empfangen, die erste Modulationselektrode (121), die zweite Modulationselektrode (122) und die dritte Modulationselektrode (123) dazu konfiguriert sind, Eingangslicht (L1) in dem ersten Modulationsarm (124) und dem zweiten Modulationsarm (125) basierend auf dem ersten Modulationssignal (S+) und dem zweiten Modulationssignal (S-) zu modulieren, und moduliertes Eingangslicht als moduliertes Licht (L2) aus dem ersten Modulationsarm (124) und dem zweiten Modulationsarm (125) ausgegeben wird,
wobei der elektrooptische Modulator (10) ferner ein Substrat (13, 33) umfasst, und der Elektrodenumwandlungsabschnitt (11, 31) und der optische Modulationsabschnitt (12) auf derselben Oberfläche des Substrats (13, 33) liegen,
**dadurch gekennzeichnet, dass**
der Elektrodenumwandlungsabschnitt (11) ferner einen Überbrückungsabschnitt (116) umfasst, der Überbrückungsabschnitt (116) in das Substrat (13) eingebettet ist und ein Teil des Überbrückungsabschnitts (116) relativ zu der Oberfläche freiliegt, die von dem Substrat (13) stammt und auf welcher sich der Elektrodenumwandlungsabschnitt (11) befindet; und
der Teil des Überbrückungsabschnitts (116), der relativ zu dem Substrat (13) freiliegt, separat mit der ersten Modulationselektrode (121) und der ersten Eingangselektrode (111) gekoppelt ist.

2. Elektrooptischer Modulator (10), umfassend:
einen Elektrodenumwandlungsabschnitt (11, 31), umfassend:
eine erste Eingangselektrode (111, 311) und eine zweite Eingangselektrode (112, 312), wobei die erste Eingangselektrode (111, 311) dazu konfiguriert ist, ein erstes Modulationssignal (S+) zu empfangen, das durch einen elektrischen Chip ausgegeben wird, und die zweite Eingangselektrode (112, 312) dazu konfiguriert ist, ein zweites Modulationssignal (S-) zu empfangen, das durch den elektrischen Chip ausgegeben wird; und einen optischen Modulationsabschnitt (12), umfassend:
eine erste Modulationselektrode (121), eine zweite Modulationselektrode (122), eine dritte Modulationselektrode (123), einen ersten Modulationsarm (124) und einen zweiten Modulationsarm (125), wobei die erste Modulationselektrode (121) zwischen der zweiten Modulationselektrode (122) und der dritten Modulationselektrode (123) liegt, der erste Modulationsarm (124) zwischen der ersten Modulationselektrode (121) und der zweiten Modulationselektrode (122) liegt, und der zweite Modulationsarm (125) zwischen der ersten Modulationselektrode (121) und der dritten Modulationselektrode (123) liegt, wobei
die erste Modulationselektrode (121) mit der ersten Eingangselektrode (111, 311) gekoppelt ist und dazu konfiguriert ist, das erste Modulationssignal (S+) zu empfangen, die zweite Modulationselektrode (122) und die dritte Modulationselektrode (123) getrennt mit der zweiten Eingangselektrode (112, 312) gekoppelt sind und getrennt dazu konfiguriert sind, das zweite Modulationssignal (S-) zu empfangen, die erste Modulationselektrode (121), die zweite Modulationselektrode (122) und die dritte Modulationselektrode (123) dazu konfiguriert sind, Eingangslicht (L1) in dem ersten Modulationsarm (124) und dem zweiten Modulationsarm (125) basierend auf dem ersten Modulationssignal (S+) und dem zweiten Modulationssignal (S-) zu modulieren, und moduliertes Eingangslicht als moduliertes Licht (L2) aus dem ersten Modulationsarm (124) und dem zweiten Modulationsarm (125) ausgegeben wird,
wobei der elektrooptische Modulator (10) ferner ein Substrat (13, 33) umfasst, und der Elektrodenumwandlungsabschnitt (11, 31) und der optische Modulationsabschnitt (12) auf derselben Oberfläche des Substrats (13, 33) liegen,
**dadurch gekennzeichnet, dass**
zwei Enden der zweiten Eingangselektrode (312) jeweils mit der zweiten Modulationselektrode (122) und der dritten Modulationselektrode (123) gekoppelt sind, und die zweite Modulationselektrode (122), die zweite Eingangselektrode (312) und die dritte Modulationselektrode (123) eingeschlossen sind, um einen Aufnahmebereich (317) auszubilden, der eine Öffnung (316) aufweist; und
die erste Eingangselektrode (311) in dem Aufnahmebereich (317) liegt, und sich die erste Modulationselektrode (121) von außerhalb des Aufnahmebereichs (317) durch die Öffnung (316) hindurch zu dem Aufnahmebereich (317) erstreckt und mit der ersten Eingangselektrode (311) gekoppelt ist.

3. Elektrooptischer Modulator (10) nach Anspruch 2, wobei der Elektrodenumwandlungsabschnitt (31) eine achsensymmetrische Struktur ist.

4. Elektrooptischer Modulator (10) nach einem der Ansprüche 1 bis 3, wobei die erste Modulationselektrode (121), die zweite Modulationselektrode (122) und die dritte Modulationselektrode (123) aus Metall hergestellt sind; und
der optische Modulationsabschnitt (12) ferner eine transparente Leitungsschicht (127) auf dem Substrat (13, 33) umfasst, und die erste Modulationselektrode (121), die zweite Modulationselektrode (122) und die dritte Modulationselektrode (123) auf einer Oberfläche liegen, die von der transparenten Leitungsschicht (127) stammt und die von dem Substrat (13, 33) entfernt ist, und in elektrischem Kontakt mit der transparenten Leitungsschicht (127) stehen.

5. Elektrooptischer Modulator (10) nach Anspruch 4, wobei die transparente Leitungsschicht (127) in direktem Kontakt mit dem ersten Modulationsarm (124) und dem zweiten Modulationsarm (125) steht.

6. Elektrooptischer Modulator (10) nach Anspruch 4 oder 5, ferner umfassend eine erste Impedanzplatte (R1), eine zweite Impedanzplatte (R2) und eine dritte Impedanzplatte (R3); wobei die erste Impedanzplatte (R1) und die zweite Impedanzplatte (R2) in Reihe miteinander verbunden sind und danach zwischen der zweiten Modulationselektrode (122) und der dritten Modulationselektrode (123) gekoppelt sind, die erste Modulationselektrode (121) mit einem Knoten zwischen der ersten Impedanzplatte (R1) und der zweiten Impedanzplatte (R2) gekoppelt ist, und die dritte Impedanzplatte (R3) zwischen der ersten Modulationselektrode (121) und dem Knoten gekoppelt ist.

7. Elektrooptischer Modulator (10) nach einem der Ansprüche 1 bis 6, wobei das erste Modulationssignal (S+) und das zweite Modulationssignal (S-) Hochfrequenzsignale sind.

8. Elektrooptischer Modulator (10) nach einem der Ansprüche 1 bis 7, wobei der erste Modulationsarm (124) und der zweite Modulationsarm (125) aus Lithiumniobat hergestellt sind.

9. Optisches Modulationssystem (1), umfassend:
den elektrooptischen Modulator (10) nach einem der Ansprüche 1 bis 8; und
einen elektrischen Chip (20), der separat mit einer ersten Eingangselektrode (111, 311) und einer zweiten Eingangselektrode (112, 312) gekoppelt ist und dazu konfiguriert ist, ein erstes Modulationssignal (S+) an die erste Eingangselektrode (111, 311) auszugeben und ein zweites Modulationssignal (S-) an die zweite Eingangselektrode (112, 312) auszugeben.

10. Integrierter optischer Chip (100), umfassend:
einen Laser (40), der dazu konfiguriert ist, Eingangslicht (L1) zu emittieren; und
den elektrooptischen Modulator (10) nach einem der Ansprüche 1 bis 8, der mit dem Laser (40) gekoppelt ist und dazu konfiguriert ist, das Eingangslicht (L1) zu empfangen, das Eingangslicht (L1) zu modulieren und moduliertes Licht (L2) auszugeben.

## Revendications

1. Modulateur électro-optique (10), comprenant :
une portion de conversion d'électrode (11, 31), comprenant :
une première électrode d'entrée (111, 311) et une seconde électrode d'entrée (112, 312), dans lequel la première électrode d'entrée (111, 311) est configurée pour recevoir un premier signal de modulation (S+) produit par une puce électronique, et
la seconde électrode d'entrée (112, 312) est configurée pour recevoir un second signal de modulation (S-) produit par la puce électronique ; et
une portion de modulation optique (12), comprenant :
une première électrode de modulation (121), une deuxième électrode de modulation (122), une troisième électrode de modulation (123), un premier bras de modulation (124) et un second bras de modulation (125), dans lequel la première électrode de modulation (121) est située entre la deuxième électrode de modulation (122) et la troisième électrode de modulation (123), le premier bras de modulation (124) est situé entre la première électrode de modulation (121) et la deuxième électrode de modulation (122), et le second bras de modulation (125) est situé entre la première électrode de modulation (121) et la troisième électrode de modulation (123), dans lequel
la première électrode de modulation (121) est couplée à la première électrode d'entrée (111, 311) et est configurée pour recevoir le premier signal de modulation (S+), la deuxième électrode de modulation (122) et la troisième électrode de modulation (123) sont couplées séparément à la seconde électrode d'entrée (112, 312) et sont configurées séparément pour recevoir le second signal de modulation (S-), la première électrode de modulation (121), la deuxième électrode de modulation (122) et la troisième électrode de modulation (123) sont configurées pour moduler une lumière d'entrée (L1) dans le premier bras de modulation (124) et le second bras de modulation (125) sur la base du premier signal de modulation (S+) et du second signal de modulation (S-), et la lumière d'entrée modulée est ensuite diffusée sous forme de lumière modulée (L2) par le premier bras de modulation (124) et le second bras de modulation (125),
dans lequel le modulateur électro-optique (10) comprend en outre un substrat (13, 33), et la portion de conversion d'électrode (11, 31) et la portion de modulation optique (12) sont sur une même surface du substrat (13, 33),
**caractérisé en ce que**
la portion de conversion d'électrode (11) comprend en outre une portion de pontage (116), la portion de pontage (116) est intégrée dans le substrat (13), et une partie de la portion de pontage (116) est exposée par rapport à la surface qui est du substrat (13) sur laquelle se trouve la portion de conversion d'électrode (11) ; et
la partie de la portion de pontage (116) exposée par rapport au substrat (13) est couplée séparément à la première électrode de modulation (121) et à la première électrode d'entrée (111).

2. Modulateur électro-optique (10), comprenant :
une portion de conversion d'électrode (11, 31), comprenant :
une première électrode d'entrée (111, 311) et une seconde électrode d'entrée (112, 312), dans lequel la première électrode d'entrée (111, 311) est configurée pour recevoir un premier signal de modulation (S+) produit par une puce électronique, et la seconde électrode d'entrée (112, 312) est configurée pour recevoir un second signal de modulation (S-) produit par la puce électronique ; et
une portion de modulation optique (12), comprenant :
une première électrode de modulation (121), une deuxième électrode de modulation (122), une troisième électrode de modulation (123), un premier bras de modulation (124) et un second bras de modulation (125), dans lequel la première électrode de modulation (121) est située entre la deuxième électrode de modulation (122) et la troisième électrode de modulation (123), le premier bras de modulation (124) est situé entre la première électrode de modulation (121) et la deuxième électrode de modulation (122), et le second bras de modulation (125) est situé entre la première électrode de modulation (121) et la troisième électrode de modulation (123), dans lequel
la première électrode de modulation (121) est couplée à la première électrode d'entrée (111, 311) et est configurée pour recevoir le premier signal de modulation (S+), la deuxième électrode de modulation (122) et la troisième électrode de modulation (123) sont couplées séparément à la seconde électrode d'entrée (112, 312) et sont configurées séparément pour recevoir le second signal de modulation (S-), la première électrode de modulation (121), la deuxième électrode de modulation (122) et la troisième électrode de modulation (123) sont configurées pour moduler une lumière d'entrée (L1) dans le premier bras de modulation (124) et le second bras de modulation (125) sur la base du premier signal de modulation (S+) et du second signal de modulation (S-), et la lumière d'entrée modulée est ensuite diffusée sous forme de lumière modulée (L2) par le premier bras de modulation (124) et le second bras de modulation (125),
dans lequel le modulateur électro-optique (10) comprend en outre un substrat (13, 33), et la portion de conversion d'électrode (11, 31) et la portion de modulation optique (12) sont sur une même surface du substrat (13, 33),
**caractérisé en ce que**
les deux extrémités de la seconde électrode d'entrée (312) sont respectivement couplées à la deuxième électrode de modulation (122) et à la troisième électrode de modulation (123), et la deuxième électrode de modulation (122), la seconde électrode d'entrée (312) et la troisième électrode de modulation (123) sont enfermées pour former une zone d'accueil (317) ayant une ouverture (316) ; et
la première électrode d'entrée (311) est située dans la zone d'accueil (317), et la première électrode de modulation (121) s'étend de l'extérieur de la zone d'accueil (317) à travers l'ouverture (316) jusqu'à la zone d'accueil (317) et est couplée à la première électrode d'entrée (311).

3. Modulateur électro-optique (10) selon la revendication 2, dans lequel la portion de conversion d'électrode (31) est une structure axisymétrique.

4. Modulateur électro-optique (10) selon l'une quelconque des revendications 1 à 3, dans lequel la première électrode de modulation (121), la deuxième électrode de modulation (122) et la troisième électrode de modulation (123) sont en métal ; et la portion de modulation optique (12) comprend en outre une couche conductrice transparente (127) sur le substrat (13, 33), et la première électrode de modulation (121), la deuxième électrode de modulation (122) et la troisième électrode de modulation (123) sont sur une surface qui est de la couche conductrice transparente (127) et qui est éloignée du substrat (13, 33), et sont en contact électrique avec la couche conductrice transparente (127).

5. Modulateur électro-optique (10) selon la revendication 4, dans lequel la couche conductrice transparente (127) est en contact direct avec le premier bras de modulation (124) et le second bras de modulation (125).

6. Modulateur électro-optique (10) selon la revendication 4 ou 5, comprenant en outre une première feuille d'impédance (R1), une deuxième feuille d'impédance (R2) et une troisième feuille d'impédance (R3) ; dans lequel
la première feuille d'impédance (R1) et la deuxième feuille d'impédance (R2) sont connectées en série l'une à l'autre puis sont couplées entre la deuxième électrode de modulation (122) et la troisième électrode de modulation (123), la première électrode de modulation (121) est couplée à un nœud entre la première feuille d'impédance (R1) et la deuxième feuille d'impédance (R2), et la troisième feuille d'impédance (R3) est couplée entre la première électrode de modulation (121) et le nœud.

7. Modulateur électro-optique (10) selon l'une quelconque des revendications 1 à 6, dans lequel le premier signal de modulation (S+) et le second signal de modulation (S-) sont des signaux de radiofréquence.

8. Modulateur électro-optique (10) selon l'une quelconque des revendications 1 à 7, dans lequel le premier bras de modulation (124) et le second bras de modulation (125) sont en niobate de lithium.

9. Système de modulation optique (1), comprenant :
le modulateur électro-optique (10) selon l'une quelconque des revendications 1 à 8 ; et
une puce électrique (20), couplée séparément à une première électrode d'entrée (111, 311) et à une seconde électrode d'entrée (112, 312), et configurée pour produire un premier signal de modulation (S+) vers la première électrode d'entrée (111, 311) et produire un second signal de modulation (S-) vers la seconde électrode d'entrée (112, 312).

10. Puce optique intégrée (100), comprenant :
un laser (40), configuré pour émettre une lumière d'entrée (L1) ; et
le modulateur électro-optique (10) selon l'une quelconque des revendications 1 à 8, couplé au laser (40) et configuré pour recevoir la lumière d'entrée (L1), moduler la lumière d'entrée (L1) et produire la lumière modulée (L2).
